# EUROPÄISCHE PATENTSCHRIFT

(11) **EP 1 084 772 B1**
(45) Veröffentlichungstag und Bekanntmachung des Hinweises auf die Patenterteilung: **25.02.2004**
(21) Anmeldenummer: 00119975.1
(22) Anmeldetag: 14.09.2000
(51) Int. Cl.: B08B 9/08, H02K 49/10

(54) **Magnetisches Getriebe und Zentrifuge mit einem magnetischen Getriebe**
Magnetic gearing and centrifuge with a magnetic gearing
Engrenage magnétique et centrifugeuse avec un engrenage magnétique

(30) Priorität: 17.09.1999 DE 19944617
(43) Veröffentlichungstag der Anmeldung: 21.03.2001
(73) Patentinhaber: Fresenius HemoCare GmbH, 61352 Bad Homburg v.d.H. (DE)
(72) Erfinder: Meisberger, Artur, 66606 St. Wendel (DE)
(74) Vertreter: Luderschmidt, Schüler & Partner GbR

(56) Entgegenhaltungen:
- EP-A- 0 669 700
- EP-A- 0 930 099
- CH-A- 436 486
- DE-A- 4 223 815

## Beschreibung

Die Erfindung betrifft ein magnetisches Getriebe und eine Zentrifuge mit einem magnetischen Getriebe, insbesondere eine gleitdichtungsfreie Durchflußzentrifuge zum Zentrifugieren biologischer Fluide, beispielsweise Blut.

Bei einer Durchflußzentrifuge strömt das in seine Bestandteile zu trennende Blut über eine Zuführleitung in eine rotierende Zentrifugenkammer, während die abgetrennten Komponenten über Abführleitungen aus der Zentrifugenkammer abgezogen werden. Die Leitungsführung erweist sich wegen der Relativbewegung von Zentrifugenkammer und ortsfester Anschlußstelle der Leitungen als problematisch. Herkömmliche Durchflußzentrifugen machen von Drehkupplungen Gebrauch, um ein Verdrillen der Leitungen zu verhindern.

Die DE-A-32 42 541 beschreibt eine gleitdichtungsfreie Zentrifuge, bei der die Zu- bzw. Abführleitung in einer Schleife mit der halben Drehzahl der Zentrifugenkammer um diese herumgeführt wird. Hierzu ist die Leitung mit einem Drehrahmen verbunden, der gegenüber der Zentrifugenkammer mit halber Drehzahl rotiert. Der Drehrahmen ist mit einer Hohlwelle verbunden, wobei der Antrieb für die Zentrifugenkammer mit einer sich durch die Hohlwelle erstreckenden Antriebswelle erfolgt. Zur Übertragung des Drehmoments auf die Hohl- und Antriebswelle findet ein Riemenantrieb Verwendung.

Die WO 96/40322 beschreibt eine Zentrifuge, die sich durch einen sehr kompakten Aufbau auszeichnet. Der Antrieb der Zentrifugenkammer und des Leitungsmitnehmers mit halber Drehzahl im gleichen Drehsinn wie die Kammer erfolgt über ein Zahnradgetriebe. Nachteilig sind jedoch die relativ großen Laufgeräusche der Zahnräder. Zudem erfordert der Einsatz von Zahnrädern eine sehr genaue und damit aufwendige und teure Herstellung der Zentrifuge. Darüber hinaus müssen die Zahnräder geschmiert werden, was nicht nur den Wartungsaufwand erhöht, sondern auch zur Ansammlung von Staub und Verschmutzung führt. Des weiteren sind die Zahnräder einem stetigen Verschleiß unterworfen.

Zur Übertragung von Drehmomenten sind magnetische Getriebe bekannt. Die EP 0 849 869 A2 beschreibt ein Getriebe mit mehreren magnetisch zusammenwirkenden, relativ zueinander beweglichen Teilen, von denen eines zur Verbindung mit einer Antriebswelle und eines als feststehendes Teil vorgesehen ist. Die einzelnen Teile sind als ringförmige Körper ausgebildet, die konzentrisch angeordnet sind.

Der Erfindung liegt die Aufgabe zu zugrunde, ein sehr kompaktes magnetisches Getriebe für eine Zentrifuge, insbesondere eine gleitdichtungsfreie Durchflußzentrifuge zu schaffen, das einen weitgehend wartungsfreien Betrieb der Zentrifuge mit hoher Drehzahl und geringen Laufgeräuschen mit verhältnismäßig geringer Antriebsleistung erlaubt. Eine weitere Aufgabe der Erfindung ist, eine derartige Zentrifuge mit einem magnetischem Getriebe zu schaffen.

Die Lösung dieser Aufgabe erfolgt erfindungsgemäß mit den im Patentanspruch 1 bzw. 13 angegebenen Merkmalen.

Das magnetische Getriebe weist einen ersten und zweiten Träger auf, die jeweils eine Vielzahl von Magnetpolen tragen, die auf einem Kreis im Abstand zueinander angeordnet sind, wobei sich Nord- und Südpole einander abwechseln. Die magnetische Kopplung des ersten und zweiten Trägers erfolgt über einen dritten Träger, der flußführende Verbindungsstücke trägt.

Zur Übertragung eines Drehmoments von einer Antriebs- auf eine Abtriebswelle wird einer der Träger festgestellt, während die anderen beiden Träger mit der Antriebs- bzw. Abtriebswelle verbunden werden. Wenn einer der beiden drehbaren Träger mit einer bestimmten Drehzahl angetrieben wird, dreht sich der andere drehbare Träger im gleichen oder entgegengesetzten Drehsinn mit einer bestimmten Drehzahl, wobei Drehsinn und Drehzahl von der Konfiguration der Magnetpole und Verbindungsstücke abhängig ist.

Zur magnetischen Kopplung des ersten und zweiten Trägers trägt der dritte Träger mindestens zwei Paare von flußführenden Verbindungsstücken, die derart angeordnet sind, daß in einer zum besseren Verständnis angenommenen Ausgangsstellung ein erster Abschnitt von dem ersten Paar der flußführenden Verbindungsstücke jeweils einer Lücke zwischen zwei benachbarten Magnetpolen des ersten Trägers und ein zweiter Abschnitt von dem ersten Paar jeweils einer Lücke zwischen zwei benachbarten Magnetpolen des zweiten Trägers zugewandt ist, während ein erster Abschnitt von dem zweiten Paar von flußfuhrenden Verbindungsstücken jeweils einem Pol eines Magneten des ersten Trägers und ein zweiter Abschnitt von dem zweiten Paar jeweils einem Pol eines Magneten des zweiten Trägers zugewandt ist. Werden die Träger relativ zueinander gedreht, stellt sich wieder ein des besseren Verständnisses wegen angenommener. Ausgangazustand ein, bei dem das eine Paar von flußführenden Verbindungsstücken einer Lücke und das andere Paar einem Magnetpol zugewandt ist. In diesen Ausgangsstellungen erzeugen die Magnete einen magnetischen Fluß, der sich über die flußführenden Verbindungsstücke schließt.

In einer bevorzugten Ausführungsform sind der erste und zweite Träger zwei parallele Scheiben, auf deren einander zugewandten Seiten Magnete angeordnet sind. Die Magnete können aber auch am Umfang der Scheiben angeordnet sein. Allein entscheidend ist, daß die Magnetpole auf einem Kreis im Abstand zueinander angeordnet sind, wobei die Nord- und Südpole einander abwechseln und der magnetische Fluß über die Verbindungsstücke geschlossen wird. Vorzugsweise weisen der erste und zweite Träger den gleichen Durchmesser auf, so daß sich die Magnete einander direkt gegenüber liegen. Die Träger können aber auch unterschiedlichen Durchmesser haben und/oder eine unterschiedliche Anzahl von Magnetpolen tragen, so daß die eine Magnetreihe versetzt zu der anderen Magnetreihe angeordnet ist.

In bevorzugter Ausgestaltung sind die Magnetpole in gleichmäßigen Abständen auf dem ersten und zweiten Träger angeordnet. Dabei ist der Abstand zwischen den Magnetpolen vorzugsweise gleich der Breite der Magnete. Vorzugsweise entspricht die Breite der flußführenden Verbindungsstücke wieder dem Abstand zwischen den Magneten. Damit sind der angetriebene und getriebene Träger in einem besonders starren Eingriff, wobei das Drehmoment weitgehend ruckfrei übertragen wird.

Um den magnetischen Fluß über den ersten und zweiten Träger schließen zu können, bestehen diese beiden Träger vorzugsweise aus weichmagnetischem Material. Die Träger brauchen aber nicht vollständig aus weichmagnetischem Material zu bestehen. Es genügt, wenn die zwischen den Magneten liegenden Teile der Träger weichmagnetisch sind, um den magnetischen Fluß zu schließen.

Die flußführenden Verbindungsstücke können entweder aus einem oder zwei flußführenden Elementen bestehen, die im Abstand zueinander angeordnet sind. Wenn zwei flußführende Elemente für jedes Verbindungsstück vorhanden sind, kann vermieden werden, daß sich der von den Magneten eines Trägers erzeugte magnetische Fluß direkt über das Verbindungsstück schließt Zur Reduzierung der Wirbelstromverluste können die Verbindungselemente des Verbindungsstücks ihrerseits aus einer Vielzahl gegeneinander isolierter Elektrobleche bestehen.

Die flußführenden Verbindungsstücke können unterschiedlich geformt sein. Allein entscheidend ist, daß deren erste und zweite Abschnitte sich zwischen den aneinander gegenüberliegenden Magneten der beiden Träger unter Bildung schmaler Luftspalte erstrecken. Zweckmäßigerweise sind der erste und zweite Abschnitt der flußführenden Verbindungsstücke deren Enden, die nahe der Magnete angeordnet sind. Die Verbindungsstücke können sich aber auch zu beiden Seiten über die Magnete hinaus erstrecken.

Bei der Zentrifuge zum Separieren von Fluiden mit dem magnetischen Getriebe ist der erste Träger feststehend auf einem Gestell angeordnet. Der dritte Träger ist als ein an dem Gestell drehbar angeordneter Drehrahmen ausgebildet, während der zweite Träger als eine an dem Drehrahmen angeordnete Separationseinheit ausgebildet ist. Zum Drehen der Separationseinheit wird der Drehrahmen angetrieben. Hierzu kann der Drehrahmen beispielsweise mit einer sich durch den feststehenden Träger erstreckenden Antriebswelle verbunden sein. Es sind aber auch andere Antriebsarten möglich.

Die Zentrifuge mit dem magnetischen Getriebe zeichnet sich durch einen sehr kompakten Aufbau aus. Sie kann weitgehend wartungsfrei mit hoher Drehzahl und geringen Laufgeräuschen mit verhältnismäßig geringer Antriebsleistung betrieben werden.

Das magnetische Getriebe ist so ausgelegt, daß sich die Separationseinheit mit der doppelten Drehzahl wie der Drehrahmen dreht. Dies kann mit zwei parallelen Scheiben mit vorzugsweise dem gleichen Durchmesser als Träger erreicht werden, auf denen die gleiche Anzahl von Magnetpolen in gleichbleibenden Abständen angeordnet sind. Während das Verhältnis der Magnetpole auf den Trägern das Verhältnis der Drehzahlen widerspiegelt, bestimmt die Stellung der flußführenden Verbindungsstücke die Drehrichtung.

Die Leitung zum Zuführen und/oder Abführen mindestens eines Fluids ist zweckmäßigerweise von einer ortsfesten Anschlußstelle um die Separationseinheit herumgeführt und an einer der ortsfesten Anschlußstelle abgewandten Seite der Separationseinheit an die Separationseinheit angeschlossen. Wenn die Separationseinheit mit der doppelten Drehzahl wie der Drehrahmen rotiert, wird ein Verdrillen der Separationseinheit vermieden.

Im folgenden werden mehrere Ausführungsbeispiele des magetischen Getriebes zusammen mit der Zentrifuge unter Bezugnahme auf die Zeichnungen näher erläutert.

Es zeigen:
- Figur 1: eine Zentrifuge mit einem magnetischen Getriebe in stark vereinfachter schematischer Darstellung,
- Figuren 2a bis 2c: das Funktionsprinzip des magnetischen Getriebes der Zentrifuge von Figur 1,
- Figuren 3a bis 3d: das Funktionsprinzip eines modifizierten Ausführungsbeispiels des magnetischen Getriebes der Zentrifuge von Figur 1 und
- Figur 4: ein alternatives Ausführungsbeispiel des magnetischen Getriebes mit gegenläufigen Magneträdern.

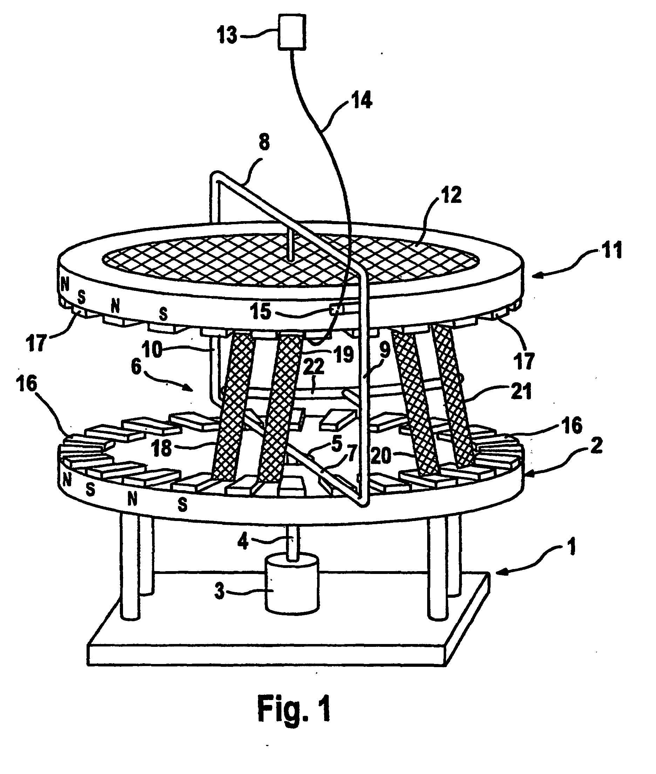

Figur 1 zeigt eine gleitdichtungsfreie Zentrifuge zum Zentrifugieren biologischer Fluide insbesondere Blut, in stark vereinfachter schematischer Darstellung. Die Zentrifuge verfügt über ein Gestell 1, auf dem ein erster Träger 2 in Form einer kreisrunden Scheibe mit dem Durchmesser D feststehend angeordnet ist. Unterhalb des ersten Trägers ist auf dem Gestell 1 ein elektromotorischer Antrieb 3 angeordnet, dessen Abtriebswelle 4 sich durch eine Ausnehmung 5 in dem ersten Träger 2 nach oben erstreckt. Der elektromotorischer Antrieb 3 dient zum Antrieb eines rechteckförmigen Drehrahmens 6, der aus zwei horizontalen Elementen 7, 8 und zwei vertikalen Elementen 9,10 besteht.

Das untere horizontale Element 7 des Drehrahmens 6 ist mit der Abtriebswelle 4 des elektromotorischen Antriebs 3 verbunden, während an dem oberen Element 8 des Drehrahmens 6 ein zweiter Träger 11 ebenfalls in Form einer kreisrunden Scheibe um die Rotationsachse des Drehrahmens 6 drehbar gelagert ist. Der erste und zweite Träger 2,11 sind parallel zueinander ausgerichtet und haben den gleichen Durchmesser D.

Der zweite Träger 11 ist als Separationseinheit ausgebildet. So kann beispielsweise eine herkömmliche Zentrifugenkammer 12 in den zweiten Träger integriert sein. Sie kann aber auch ober- oder unterhalb des zweiten Trägers angeordnet sein.

Von einer ortsfesten Anschlußstelle 13 ist eine flexible Leitung 14, in der ein oder mehrere Schläuche zum Zuführen und Abführen des Blutes bzw. der Blutbestandteile in die bzw. aus der Separationseinheit 12 zusammengefaßt sind, um die Zentrifugenkammer herumgeführt und an der Unterseite des zweiten Trägers 11 an die Separationseinheit angeschlossen ist. An dem horizontalen Element 9 des Drehrahmens 6 ist eine Leitungastütze 15 angebracht, an der die Leitung 14 fixiert ist. Die Leitung kann aber auch lose geführt sein, ohne daß sie mit dem Drehrahmen verbunden ist.

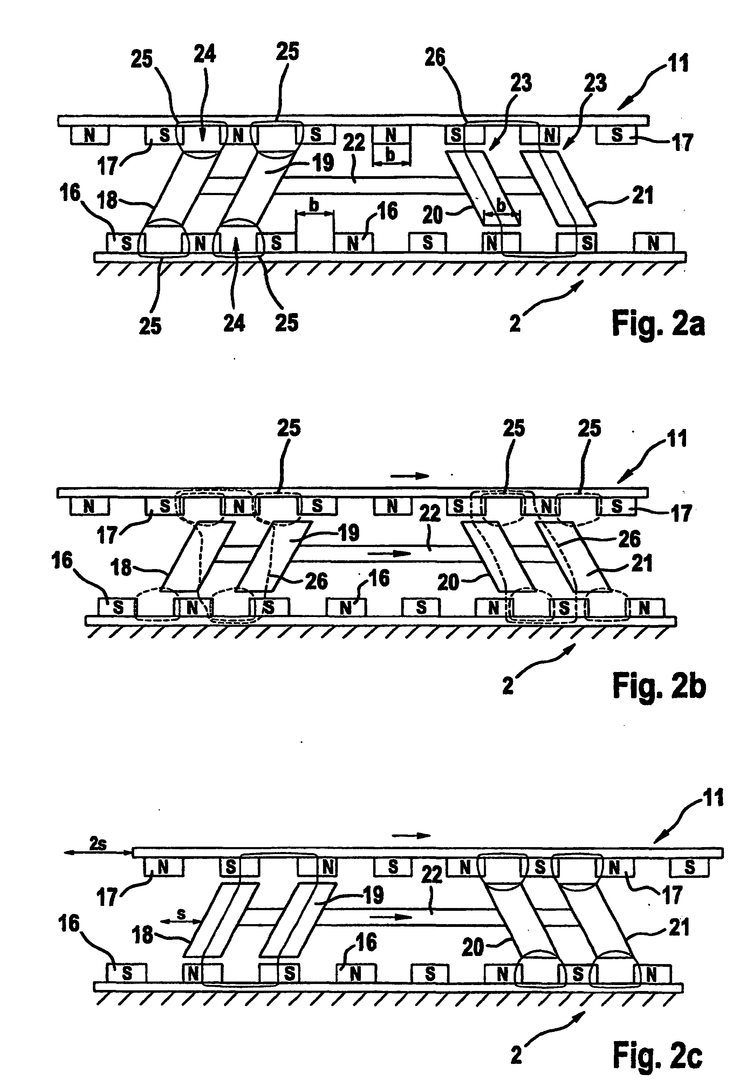

Der erste und zweite Träger 2, 11 tragen an ihren einander zugewandten Innenseiten eine Vielzahl von Magnetpolen 16,17, die auf einem Kreis im Abstand zueinander angeordnet sind, wobei die Nord- und Südpole einander abwechseln. Die magnetische Kopplung des ersten und zweiten Trägers 2,11 erfolgt mit flußführenden Verbindungsstücken 18,19, 20, 21, die an dem Drehrahmen 6 angebracht sind. Hierzu ist eine seitliche Abstützung 22 vorgesehen, die an dem horizontalen Ende 9 des Drehrahmens befestigt ist. Die magnetische Kopplung des ersten und zweiten Trägers mit den flußfuhrenden Verbindungsstücken wird unter Bezugnahme auf die Figuren 2a bis 2c noch im einzelnen beschrieben.

Der Antrieb der Separationseinheit 12 und des Drehrahmens 6 arbeitet wie folgt. Der elektromotorisches Antrieb 3 treibt den Drehrahmen 6 zusammen mit den flußführenden Verbindungsstücken 18, 19,20,21 mit der Drehzahl n an. Der zweite Träger 11, der über die Verbindungsstücke mit dem ersten Träger 2 magnetisch im Eingriff ist, rotiert in der gleichen Drehrichtung wie der Drehrahmen, aber mit der doppelten Drehzahl 2n. Dadurch wird ein Verdrillen der Leitung 14 vermieden.

Die Figuren 2a bis 2c zeigen das Funktionsprinzip des magnetischen Getriebes. Die beiden Träger bestehen aus weichmagnetischen Material. Der erste Träger 2 steht fest, während der zweite Träger 11 drehbar gelagert ist. Die einzelnen Magnete 16,17 sind an den Trägern 11 mit abwechselnden Nord- und Südpolen in gleichbleibenden Abständen angeordnet. Die Breite der Magnetpole b entspricht der Breite b der Lücken zwischen den benachbarten Magneten. Zur magnetischen Kopplung der beiden Träger sind zwei Paare 18,19; 20, 21 von flußführenden Verbindungsstücken aus weichmagnetischem Material vorgesehen. Die plattenförmigen Verbindungsstücke haben die gleiche Breite b wie die Magnete 16,17. Die ersten beiden Verbindungsstücke 18,19 sind parallel zueinander ausgerichtet und nebeneinander liegend schräg zur Rotationsachse des Drehrahmens 6 an dessen seitlicher Abstützung 22 befestigt. Auch die beiden anderen Verbindungsstücke 20,21 sind parallel zueinander ausgerichtet schräg zur Rotationsachse des Drehrahmens an dessen Abstützung befestigt, wobei die beiden anderen Verbindungsstücke in die andere Richtung geneigt sind. Alle Verbindungsstücke erstrecken sich zwischen den einander gegenüberliegenden Magneten, so daß zwischen den Verbindungsstücken und den Magneten nur schmale Luftspalte 23 verbleiben. Der seitliche Abstand der Verbindungsstücke eines Paares entspricht der doppelten Breite 2b der Magnete.

Figur 2a zeigt einen zum besseren Verständnis angenommenen Ausgangszustand, in dem die Enden der beiden linken Verbindungsstücke 18,19 jeweils einer Lücke 24 der beiden Träger 2,11 zugewandt sind, während die beiden rechten Verbindungsstücke 20, 21 jeweils einem Magneten 16,17 der Träger zugewandt sind. Der von den Magneten erzeugte magnetische Fluß schließt sich bei den an den Lücken stehenden Verbindungsstücken 18,19 direkt über deren Enden. Diese magnetischen Kreise sind mit den Bezugszeichen 25 versehen. Bei den an den Magneten stehenden Verbindungsstücken 20, 21 schließt sich der magnetische Fluß über die Verbindungsstücke. Dieser magnetische Kreis ist mit den Bezugszeichen 26 versehen.

Figur 2b zeigt die Anordnung von Figur 2a, wobei der Drehrahmen 6 so weit verdreht ist, daß die Enden der linken Verbindungsstücke 18,19 die benachbarten Magnete 16,17 teilweise überlappen und die Enden der rechten Verbindungsstücke 20, 21 über die zwischen den Magneten liegenden Lücken 24 vorgeschoben sind. In dieser Zwischenposition bilden sich auf der linken Seite ein über die Verbindungsstücke 18, 19 geschlossener magnetischer Kreis und auf der rechten Seite über die Enden der Verbindungsstücke 20, 21 geschlossene magnetische Kreise aus, die mit den Bezugszeichen 25, 26 versehen sind. Der magnetische Fluß ist allerdings relativ schwach. Daher sind diese magnetischen Kreise in gestrichelten Linien gezeichnet. In dieser Zwischenstellung folgt der zweite Träger 11 noch nicht der Drehbewegung des Rahmens 6.

Wird der Drehrahmen 6 weiter gedreht, so daß jetzt die linken Verbindungsstücke 18, 19 an den Magneten 16, 17 und die rechten Verbindungsstücke 20, 21 an den Lücken 24 des ersten Trägers 2 stehen, wird der zweite Träger 11 von dem ersten Träger aufgrund der magnetischen Kopplung mitgenommen. Der zweite Träger 11 nimmt wieder eine Position ein, in der die linken Verbindungsstücke an dessen Magneten und die rechten Verbindungsstücke an dessen Lücken stehen. Nun schließt sich der magnetische Fluß auf der linken Seite über die Verbindungsstücke, während sich der magnetische Fluß auf der rechten Seite über deren Enden direkt schließt. Bei einer kontinuierlichen Drehbewegung des Drehrahmens mit der Drehzahl n dreht sich der zweite Träger im gleichen Drehsinn mit der Drehzahl 2n.

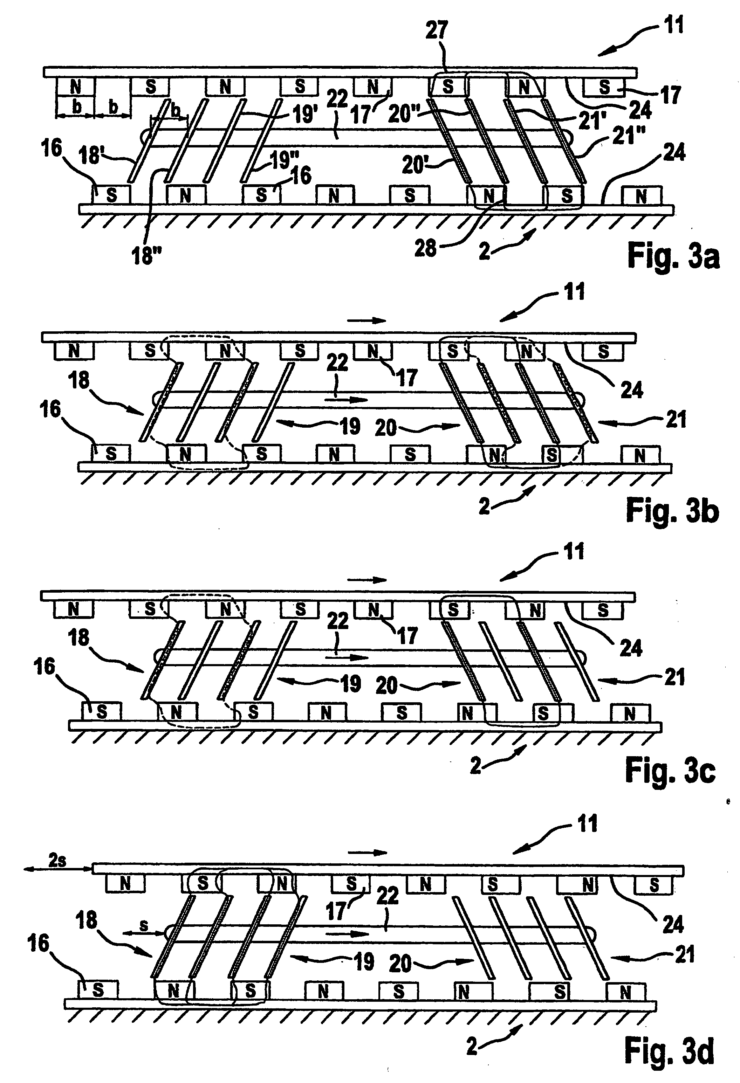

Die Figuren 3a bis 3d zeigen das Funktionsprinzip eines modifizierten magnetischen Getriebes. Das magnetische Getriebe gemäß der Figuren 3a bis 3d unterscheidet sich von dem unter Bezugnahme auf die Figuren 2a bis 2c beschriebenen Getriebe dadurch, daß die Verbindungsstücke jeweils aus zwei plattenförmigen Verbindungselementen 18', 18"; 19', 19"; 20', 20"; 21', 21" bestehen, die parallel zueinander ausgerichtet sind. Der Abstand zwischen den beiden Verbindungselementen jedes Verbindungsstücks entspricht der Breite b der Magnete bzw. der Lücken. Die Teile von den Figuren 3a bis 3d, die denjenigen der Figuren 2a bis 2c entsprechen, sind mit den gleichen Bezugszeichen versehen.

Auch bei dem Ausführungsbeispiel gemäß der Figuren 3a bis 3d dreht sich der zweite Träger mit der doppelten Drehzahl des Drehrahmens in der geleichen Drehrichtung. Figur 3a zeigt die stabile Ausgangsstellung, in der sich der magnetische Fluß über die an den Magneten stehenden Verbindungselemente 20', 20"; 21', 21" schließt. Diese magnetischen Kreise sind mit den Bezugszeichen 27, 28 versehen. Über die Enden der an den Lücken stehenden Verbindungselemente 18', 18"; 19', 19" kann sich der magnetische Fluß hingegen nicht schließen.

Wenn der Drehrahmen 6 gedreht wird, stellen sich zunächst die in den Figuren 3b und 3c gezeigten Zwischenzustände ein, bei denen sich der magnetische Fluß über die Verbindungselemente schließt. Die starken magnetischen Feldlinien sind in durchgezogenen Linien und die schwachen magnetischen Feldlinien mit gestrichelten Linien gezeichnet. Hierbei wird der zweite Träger 11 aber noch nicht mitgenommen.

Erste wenn die linken Verbindungselemente 18,19 an den Magneten 16, 17 und die rechten Verbindungselemente 20, 21 an den Lücken 24 des ersten Trägers 2 stehen, stellt sich wieder des besseren Verständnisses wegen angenommener Ausgangszustand ein (Figur 3d). Der zweite Träger 11 folgt der Drehbewegung des Drehrahmens 6, bis dessen Magnete 17 oberhalb der linken Verbindungselemente 18,19 und dessen Lücken 24 oberhalb der rechten Verbindungselemente 20, 21 liegen. Der magnetische Fluß schließt sich nun auf der linken Seite. Mit einer derartigen Anordnung der Verbindungselemente wird ein sehr gleichmäßiger Lauf erreicht.

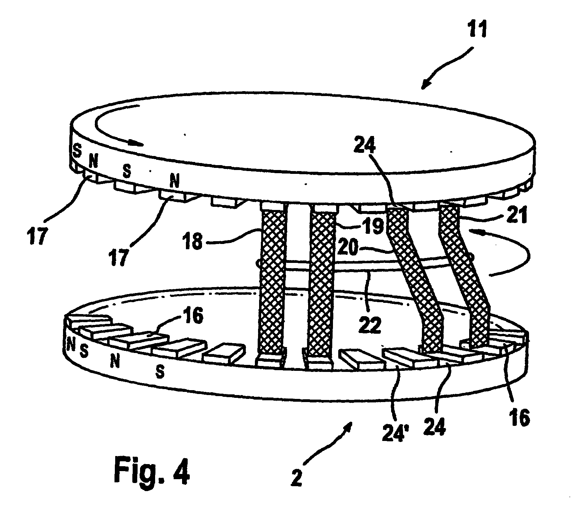

Figur 4 zeigt in vereinfachter schematischer Darstellung den ersten und zweiten Träger 2,11 zusammen mit den flußführenden Verbindungsstücken 18, 19; 20,21 eines magnetischen Getriebes, bei dem der zweite Träger mit der doppelten Drehzahl des nicht dargestellten Drehrahmens in entgegengesetzter Drehrichtung dreht. Die einander entsprechenden Teile sind wieder mit den gleichen Bezugszeichen versehen. Die entgegengesetzte Drehrichtung resultiert daraus, daß eines der beiden Verbindungsstückpaare 20, 21 sich nicht von einer Lücke 24 bzw. einem Magneten des einen Trägers 11 zu der Lücke 24' bzw. dem Magneten des anderen Trägers 2 erstreckt, die bzw. der der Lücke 24 bzw. dem Magneten des einen Trägers 11 direkt gegenüber liegt, sondern zu einer um einen Magnetpol dazu versetzten Lücke 24 bzw. einem dazu versetzten Magneten.

## Patentansprüche

1. Magnetisches Getriebe mit mehreren magnetisch zusammenwirkenden, relativ zueinander drehbaren Trägern, **gekennzeichnet durch** einen ersten und zweiten Träger (2, 11), die jeweils eine Vielzahl von Magnetpolen (16, 17) tragen, wobei auf einem Kreis im Abstand zueinander abwechselnd Nord- und Südpole angeordnet sind, und einen dritten Träger (6), der mindestens zwei Paare von flußführenden Verbindungsstücken (18, 19; 20, 21) trägt, die derart angeordnet sind, daß in einer Rotationsstellung der Träger ein erster Abschnitt von dem ersten Paar der flußführenden Verbindungsstücke (18, 19) jeweils einer Lücke zwischen zwei benachbarten Magnetpolen des ersten Trägers (2) und ein zweiter Abschnitt von dem ersten Paar jeweils einer Lücke zwischen zwei benachbarten Magnetpolen des zweiten Trägers (11) zugewandt ist, während ein erster Abschnitt von dem zweiten Paar von flußführenden Verbindungsstücken (20, 21) jeweils einem Magnetpol (17) des ersten Trägers und ein zweiter Abschnitt von dem zweiten Paar jeweils einem Magnetpol (17) des zweiten Trägers (11) zugewandt ist.

2. Magnetisches Getriebe nach Anspruch 1, **dadurch gekennzeichnet, daß** der erste und zweite Träger (2, 11) zwei parallele Scheiben sind, auf deren einander zugewandten Seiten Magnete (16, 17) angeordnet sind.

3. Magnetisches Getriebe nach Anspruch 2, **dadurch gekennzeichnet, daß** der erste und zweite Träger (2, 11) den gleichen Durchmesser aufweisen.

4. Magnetisches Getriebe nach einem der Ansprüche 1 bis 3, **dadurch gekennzeichnet, daß** Magnete (16,17) in gleichmäßigen Abständen auf dem ersten und zweiten Träger (2, 11) angeordnet sind.

5. Magnetisches Getriebe nach einem der Ansprüche 1 bis 4, **dadurch gekennzeichnet, daß** die Anzahl der Magnetpole (16,17) auf dem ersten und zweiten Träger (2,11) gleich ist.

6. Magnetisches Getriebe nach einem der Ansprüche 2 bis 5, **dadurch gekennzeichnet, daß** der Abstand zwischen dem Magneten (16,17) des ersten und zweiten Trägers (2, 11) gleich der Breite der Magnete ist.

7. Magnetisches Getriebe nach einem der Ansprüche 2 bis 6, **dadurch gekennzeichnet, daß** die Breite der flußführenden Verbindungsstücke (18, 19; 20, 21) dem Abstand zwischen den Magneten (16, 17) entspricht.

8. Magnetische Getriebe nach einem der Ansprüche 1 bis 7, **dadurch gekennzeichnet, daß** der erste und zweite Träger (2, 11) aus weichmagnetischem Material bestehen.

9. Magnetisches Getriebe nach einem der Ansprüche 1 bis 8, **dadurch gekennzeichnet, daß** die flußführenden Verbindungsstücke (18,19; 20,21) jeweils ein Joch aus weichmagnetischem Material sind.

10. Magnetisches Getriebe nach einem der Ansprüche 1 bis 8, **dadurch gekennzeichnet, daß** die flußführenden Verbindungstücke (18,19) jeweils aus zwei flußführenden Elementen (18', 18"; 19', 19') bestehen, die im Abstand zueinander angeordnet sind.

11. Magnetisches Getriebe nach einem der Ansprüche 1 bis 10, **dadurch gekennzeichnet, daß** der ersten und zweite Abschnitt der flußführenden Verbindungsstücke (18,19; 20,21) deren Enden sind, die nahe der Magnete (16, 17) bzw. Lücken (24) angeordnet sind.

12. Magnetisches Getriebe nach einem der Ansprüche 1 bis 11, **dadurch gekennzeichnet, daß** der zweite und dritte Träger (11, 6) drehbar und der erste Träger (2) feststehend angeordnet sind.

13. Zentrifuge zum Separieren von Fluiden, mit einem magnetischen Getriebe nach einem der Ansprüche 1 bis 12.

14. Zentrifuge nach Anspruch 13, **dadurch gekennzeichnet, daß** der erste Träger (2) feststehend auf einem Gestell (1) angeordnet ist und der dritte Träger als ein an dem Gestell drehbar angeordneter Drehrahmen (6) und der zweite Träger (11) als eine an dem Drehrahmen angeordnete Separationseinheit (12) ausgebildet ist.

15. Zentrifuge nach Anspruch 14, **dadurch gekennzeichnet, daß** eine Leitung (14) zum Zuführen und/oder Abführen mindestens eines Fluids von einer ortsfesten Anschlußstelle (13) um die Separationseinheit (12) herumgeführt und an einer der ortsfesten Anschlußstelle abgewandten Seite der Separationseinheit an die Separationseinheit angeschlossen ist.

## Claims

1. Magnetic gear with several magnetically interacting supports that can be rotated relative to each other, **characterised by** a first and second support (2, 11), each supporting a large number of magnetic poles (16, 17), wherein north and south poles are arranged alternately and at a certain distance from each other on a circle, and by a third support (6), which supports at least two pairs of flux conducting connecting pieces (18, 19; 20, 21), which are arranged so that a first section of the first pair of flux conducting connecting pieces (18, 19) faces a gap between two adjacent magnetic poles of the first support (2), and a second section of the first pair faces a gap between two adjacent magnetic poles of the second support (11), whilst a first section of the second pair of flux-conducting connecting pieces (20, 21) faces one magnetic pole (17) of the first support and a second section of the second pair faces one magnetic pole (17) of the second support.

2. Magnetic gear according to claim 1, **characterised in that** the first and second supports (2, 11) are two parallel discs on whose sides, facing each other, magnets (16, 17) are arranged.

3. Magnetic gear according to claim 2, **characterised in that** the first and second supports (2, 11) have the same diameter.

4. Magnetic gear according to one of caims 1 to 3, **characterised in that** magnets (16, 17) are arranged equidistantly on the first and second supports (2, 11).

5. Magnetic gear according to one of claims 1 to 4, **characterised in that** the number of magnetic poles (16, 17) on the first and second supports (2, 11) is the same.

6. Magnetic gear according to one of claims 2 to 5, **characterised in that** the distance between the magnet (16, 17) of the first and second support (2, 11) is equal to the width of the magnets.

7. Magnetic gear according to one of claims 2 to 6, **characterised in that** the width of the flux-conducting connecting pieces (18, 19; 20, 21) is equal to the distance between the magnets (16, 17).

8. Magnetic gear according to one of claims 1 to 7, **characterised in that** the first and second supports (2, 11) consist of soft magnetic material.

9. Magnetic gear according to one of claims 1 to 8, **characterised in that** each of the flux-conducting connecting pieces (18, 19; 20,21) is a yoke of soft magnetic material.

10. Magnetic gear according to one of claims 1 to 8, **characterised in that** the flux-conducting connecting pieces (18, 19) each consist of two flux-conducting elements (18', 18"; 19', 19") which are arranged at a certain distance from each other.

11. Magnetic gear according to one of claims 1 to 10, **characterised in that** the first and second section of the flux-conducting connecting pieces (18, 19; 20, 21) are their ends which are arranged near the magnets (16, 17) or gaps (24).

12. Magnetic gear according to one of claims 1 to 11, **characterised in that** the second and third supports (11, 6) are arranged so that they can be rotated and **in that** the first support (2) is arranged in a fixed position.

13. Centrifuge for separating fluids with a magnetic gear according to one of claims 1 to 12.

14. Centrifuge according to claim 13, **characterised in that** the first support (2) is arranged in a fixed position on a frame (1), and **in that** the third support is designed as a rotary frame (6) arranged rotatably on the frame, and **in that** the second support (11) is designed as a separating unit (12) arranged on the rotary frame.

15. Centrifuge according to claim 4, **characterised in that** a pipe (14) for feeding and/or discharging at least one fluid from a fixed connection point (13) is guided around the separating unit (12) and is connected to the separating unit on a side of the separating unit facing away from the fixed connection point

## Revendications

1. Engrenage magnétique équipé de plusieurs supports pouvant tourner les uns par rapport aux autres, coopérant magnétiquement, **caractérisé par** un premier et un second supports (2,11), qui portent respectivement une pluralité de pôles magnétiques (16,17), des pôles nord et des pôles sud étant disposés en alternance écartés les uns des autres sur un cercle, et un troisième support (6); qui porte au moins deux paires d'éléments de liaison conducteurs de flux (18, 19; 20,21), qui sont disposés de telle sorte que dans une position de rotation des supports un premier tronçon de la première paire des éléments de liaison conducteurs de flux (18,19) est tourné respectivement vers un vide entre deux pôles magnétiques adjacents du premier support (2) et un second tronçon de la première paire est tourné respectivement vers un vide entre deux pôles magnétiques adjacents du second support (11), tandis qu'une premier tronçon de la seconde paire d'éléments de liaison conducteurs de flux (20, 21) est tourné respectivement vers un pôle magnétique (17) du premier support et un second tronçon de la seconde paire est tourné respectivement vers un pôle magnétique (17) du second support (11).

2. Engrenage magnétique selon la revendication 1, **caractérisé en ce que** les premier et second supports (2, 11) sont deux disques parallèles; sur les côtés desquels tournés l'une vers l'autre sont disposés des aimants (16, 17).

3. Engrenage magnétique selon la revendication 2, **caractérisé en ce que** les premier et second supports (2, 11) présentent le même diamètre.

4. Engrenage magnétique selon l'une des revendications 1 à 3, **caractérisé en ce que** les aimants (16, 17) sont disposés équidistants sur les premier et second supports (2,11).

5. Engrenage magnétique selon l'une des revendications 1 à 4, **caractérisé en ce que** le nombre des pôles magnétiques (16, 17) sur les premier et second supports (2,11) est identique.

6. Engrenage magnétique selon l'une des revendications 2 à 5, **caractérisé en ce que** l'écartement entre les aimants (16, 17) des premier et second supports (2, 11) est égal à la largeur des aimants.

7. Engrenage magnétique selon l'une des revendications 2 à 6, **caractérisé en ce que** la largeur des éléments de liaison conducteurs de flux (18, 19; 20, 21) correspond à l'écartement entre les aimants (16, 17).

8. Engrenage magnétique selon l'une des revendications 1 à 7, **caractérisé en ce que** le premier et le second supports (2, 11) sont en matériau magnétique doux.

9. Engrenage magnétique selon l'une des revendications 1 à 8, **caractérisé en ce que** les éléments de liaison conducteurs de flux (18, 19; 20,21) sont respectivement une armature en matériau magnétique doux.

10. Engrenage magnétique selon l'une des revendications 1 à 8, **caractérisé en ce que** les éléments de liaison conducteurs de flux (18, 19) se composent respectivement de deux éléments conducteurs de flux (18', 18"; 19',19"), qui sont disposés écartés les uns des autres.

11. Engrenage magnétique selon l'une des revendications 1 à 10, **caractérisé en ce que** le premier et le second tronçon des éléments de liaison conducteurs de flux (18, 19; 20, 21) sont des extrémités de ceux-ci, qui sont disposées près des aimants (16, 17) ou des vides (24).

12. Engrenage magnétique selon l'une des revendications 1 à 11, **caractérisé en ce que** le second et le troisième supports (11,6) sont rotatifs et le premier support (2) est fixe.

13. Centrifugeuse en vue de la séparation de fluides, équipée d'un engrenage magnétique selon l'une de revendications 1 à 12.

14. Centrifugeuse selon la revendication 13, **caractérisée en ce que** le premier support (2) est disposé fixe sur un bâti(1) et le troisième support est réalisé en tant que cadre rotatif (6) disposé à rotation sur le bâti et le second support (11) est réalisé en tant qu'unité de séparation (12) disposée sur le cadre rotatif.

15. Centrifugeuse selon la revendication 14, **caractérisée en ce qu'**une canalisation (14) d'amenée et/ou d'évacuation d'au moins d'un fluide est guidée depuis un point de raccordement fixe (13) autour de l'unité de séparation (12) et est reliée à l'unité de séparation à un côté de celle-ci éloigné du point de raccordement fixe.
